**Europäisches Patentamt**

**European Patent Office**

**Office européen des brevets**

(11) Publication number: **0 172 151**
**B1**

(12) **EUROPEAN PATENT SPECIFICATION**

(45) Date of publication of patent specification: **23.11.89**

(51) Int. Cl.⁴: **A 01 G 9/14, A 01 G 9/22**

(21) Application number: **85850254.5**

(22) Date of filing: **05.08.85**

(54) Greenhouse screen.

(30) Priority: **06.08.84 SE 8403986**

(43) Date of publication of application:
**19.02.86 Bulletin 86/08**

(45) Publication of the grant of the patent:
**23.11.89 Bulletin 89/47**

(84) Designated Contracting States:
**AT BE CH DE FR GB IT LI LU NL SE**

(56) References cited:
**BE-A- 892 561**
**DD-A- 79 397**
**DD-A- 211 053**
**DE-A-2 107 346**
**GB-A-2 093 042**

(73) Proprietor: **Ludvig Svensson International B.V.**
**Langeweg 1**
**NL-3214 LJ Zuidland (NL)**

(72) Inventor: **Henningsson, Göran**
**Enebergsvägen 18**
**S-511 00 Kinna (SE)**
Inventor: **Hellgren, Olof**
**Dösvägen 78**
**S-222 54 Lund (SE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

## Description

The present invention concerns a greenhouse screen of a film, textile or non-woven material with high resistance to light degradation and good weathering characteristics.

Background of the invention

Successful growth in greenhouses is strongly dependent on an appropriate amount of light penetration to the plants so that photosynthesis generates the desired development of the plants. During recent years shadow curtains have been used, the primary purpose of which is to prevent undesirable sunshine so that the plants do not overheat. Of all sunshine about 45% is visible light, that is photosynthetic light, while the remainder, about 55%, only gives heat. An ideal shadow curtain should reduce the photosynthetic light minimally and reflect all other light maximally.

One disadvantage with the shadow curtain is that it blacks out the greenhouse to such an extent that at the same time it is impossible to work inside.

The plants' requirements for photosynthetic light vary considerably from one type of plant to another and certain plants are so-called short day plants which require short days to bloom quickly. If the natural day is not sufficiently short the plant must be fooled, which is achieved with blackout curtains which completely shut out the light. However blackout can cause the plant to stretch itself in an undesirable way or cause blooming to be delayed. The blackout curtain can also have the characteristics of an energy curtain, that is, it should reduce the flow of heat to the cold greenhouse and thereby reduce water evaporation from the earth and plants and it should reflect heat radiation from the heating pipes, plants, earth, etc. in the greenhouse.

As different plants are variously sensitive to light and temperature, very stringent requirements are placed on the growers' experience and know-how that the correct steps are taken at the right time.

The GB—A—2.093.942 discloses a material for greenhouses adapted to transmit the larger part of incident sunlight and to reflect a larger part of the incident IR-radiation. Thus the larger part of the incident sunlight is transmitted with the same spectral characteristics and there is no alteration of the sunlight spectra.

The DD—A—211 053 discloses a greenhouse curtain in the form of narrow strips of film or foil material interconnected by a framework of textile threads. The strips consist of a material which transmits or reflects sunlight and/or reflects or absorbs heat radiation. There is not mentioned a material which would alter the sunlight spectra.

The US—A—3.542.710 discloses a coloured transparent thermoplastic sheet material for controlling growth of plants. Graphs are shown for a blue transparent film and for a red transparent film. The transmission in the wavelength interval 600—750 nm is for the blue film 20—60% and for the red film 70—90%, which is far too high for rendering it usable as a "short-day" filter.

The US—A—3.857.804 refers to a mulching foil having a light transmission from 0 to 10% in the wavelength interval of 300—500 nm, from 0 to 35% in the interval of 500—750 nm and from 0 to 90% in the interval of 750—900 nm. Since having a high absorption of the active photosynthetic light about the interval of 500 nm the photosynthetic process is blocked for regions covered by the material.

The purpose of the invention and its most important characteristics.

The purpose of the present invention is to achieve a greenhouse screen which combines the characteristics which a shadow curtain and a blackout curtain and in certain cases also an energy curtain have. As a shadow curtain it should exclude undesired sunshine, that is, the sunshine that the plants cannot use in photosynthesis. The blackout curtain should simulate short daylight hours so that the plant can develop in the desired manner, and the energy curtain should reduce heat convection and energy costs through its ability to reflect light, and have a high absorption capability in order to prevent water condensation. These goals have been achieved by letting the greenhouse screen at least partly consist of a material which is sunshine absorbing in a significant part of the wavelength interval 575—800 nm, preferably with a maximum in the interval 600—750 nm, while the photosynthesis light of the sunshine of wavelength interval 400—575 nm is mainly transmitted through the material.

By making greenhouse screens with larger or smaller portions of said sunshine absorbing and/or reflecting material and through addition of material with other functions greenhouse curtains can be made with widely varying characteristics. Accordingly, it is possible to keep the short day plant in both a vegetative and an inducing phase and in that way shorten the production time essentially (with about 15%).

Description of example embodiments

The greenhouse screen according to the invention can be appropriately made of a film material which absorbs light in a significant part of the wavelength interval 575—800 nm, while the photosynthesis light of the sunshine of the wavelength interval 400—575 nm is mainly transmitted through the material. The film material is incorporated in the greenhouse screen in the form of narrow strips which can be connected in a variety of different ways, for example through knitting methods where the film strips are fixed relative to each other by a thinly woven yarn skeleton. The mesh size between the film strips should then be as little as possible so that the relative surface of the strips is as large as possible. Instead of a knitting procedure the strips can be connected by weaving whereby the warp can consist of the film strips while the wefts are appropriately made of very thin threads of a synthetic textile material. It is even possible that the wefts consist of film strips, in which embodiment two strips on top of each other have the desired light absorption in the given wavelength interval 575—800 nm.

The film strip material's absorption curve does not necessarily have to be constant, but it should have its maximum in the interval 600—750 nm, from which interval the absorption can decrease successively.

In order to achieve different effects a larger or smaller amount of other material strips with specific functions can be incorporated in the greenhouse screen. Depending on for which plants the fabric is to be used a certain percentage of the curtain's total area can consist of strips of highly reflective, low emittance film material such as aluminium foil, which then also functions as a blackout curtain, in addition to the said sunshine absorbing material strips. It is even possible that a certain amount of white film strips be included in the curtain in order to achieve a certain shadow effect. The highly reflecting, low emittance aluminium strips can be provided with a heat radiation absorbing layer on their undersides, that is the sides facing toward the plants. The width of the strips can also be adjusted according to requirements and needs, such as ease in hanging, and can vary from a few millimeters to several centimeters. From experience one knows which plants are very sensitive to light and which ones are more robust. Such experience is used in making the greenhouse screens so that the grower has access to different types of curtains and can adjust the light screening to both the type of plant and its needs and to the season and weather.

**Claims**

1. Greenhouse screen, for use as a filter for short-day treatment of plants and made of a film, textile or non-woven material or a combination thereof with high resistance to light and good weathering characteristics, characterized in that it at least partly consists of a material which in one or more layers has high absorption of light in a significant part of the wavelength interval 575—800 nm, preferably with a maximum in the interval 600—750 nm, and which has a high transmittance of light in the wavelength interval 400—575 nm.

2. Greenhouse screen according to claim 1, characterized in that said material is in the form of narrow strips connected to each other providing a fabric by a weaving or knitting technique.

3. Greenhouse screen according to claim 2, characterized in that in addition to the said light absorbing material strips of highly reflecting, low emittance film material and/or strips of white film are included in a backing for the material.

4. Greenhouse screen made by weaving according to claim 2 or 3, characterized in that there is a weave warp including said material strips, and a weft including thin threads of synthetic textile material and/or of the same material as the warp and/or of white film strips.

5. Greenhouse screen according to claim 3, characterized in that the highly reflecting coating on the film material is limited to one side, while the other side is a heat radiation absorbing layer.

**Patentansprüche**

1. Gewächshausgardine zur Anwendung als Filter für die Kurztag-Behandlung von Gewächsen, hergestellt aus einem Folien-, Textil- oder Vliesmaterial, oder einer Kombination davon, mit hoher Widerstandsfähigkeit gegenüber Licht und guter Witterungsbeständigkeit, dadurch gekennzeichnet, daß sie zumindest teilweise aus einem Material besteht, das in einer oder mehreren Schichten eine hohe Absorptionsfähigkeit für Licht zu einem signifikanten Teil in dem Wellenlängen-Intervall von 575 bis 800 nm, vorzugsweise mit einem Maximum in dem Intervall von 600 bis 750 nm, sowie eine hohe Lichtdurchlässigkeit in dem Wellenlängen-Intervall von 400 bis 575 nm hat.

2. Gewächshausgardine nach Anspruch 1, dadurch gekennzeichnet, daß das genannte Material in Form von schmalen Streifen vorliegt, die mittels einer Web- oder Wirktechnik miteinander zu einer Bahn verbunden sind.

3. Gewächshausgardine nach Anspruch 2, dadurch gekennzeichnet, daß zusätzlich zu dem genannten lichtabsorbierenden Material Streifen eines hochreflektierenden, wenig Strahlung abgebenden Folienmaterials und/oder Streifen aus weißer Folie in einer Stützlage für das Material enthalten sind.

4. Gewächshausgardine, hergestellt durch einen Webvorgang gemäß Anspruch 2 oder 3, dadurch gekennzeichnet, daß die Kette der Webstruktur die genannten Materialstreifen beinhaltet und der Schluß der Webstruktur dünne Fäden aus einem synthetischen Textilmaterial und/oder dasselbe Material wie die Kette und/oder weiße Folienstreifen aufweist.

5. Gewächshausgardine nach Anspruch 3, dadurch gekennzeichnet, daß eine hochreflektierende Beschichtung auf dem Folienmaterial auf eine Seite beschränkt ist, während die andere Seite eine die Wärmestrahlung absorbierende Schicht ist.

**Revendications**

1. Ecran de serre destiné à être utilisé comme filtre pour le traitement à jour court des plantes et réalisé en un matériau pelliculaire, textile ou non tissé ou bien les deux en combinaison, présentant une résistance élevée à la lumière et de bonnes caractéristiques de résistance à l'action des intempéries, caractérisé en ce qu'il est constitué au moins partiellement par un matériau qui, en une ou plus d'une couche, présente une absorption élevée de lumière dans une zone significative de l'intervalle de longueur d'onde de 575 à 800 nm, de préférence avec un maximum dans l'intervalle de 600 à 750 nm, et qui présente une capacité élevée de transmission de la lumière dans l'intervalle de longueur d'onde de 400 à 575 nm.

2. Ecran de serre selon la revendication 1, caractérisé en ce que ledit matériau est sous la forme de bandes étroites reliées les unes aux autres pour réaliser un tissu au moyen d'une technique de tissage ou de tricotage.

3. Ecran de serre selon la revendication 2, caractérisé en ce que, outre ledit matériau absorbant la lumière, des bandes en matériau pelliculaire hautement réfléchissantes et à bas pouvoir d'émission et/ou des bandes en pellicule blanche sont incorporées dans un substrat pour le matériau.

4. Ecran de serre fabriqué par tissage selon la revendication 2 ou 3, caractérisé en ce qu'il présente une chaîne de tissage renfermant lesdites bandes de matériau et une trame renfermant des fils fins en un matériau synthétique textile et/ou dans le même matériau que les bandes de chaîne et/ou de pellicule blanche.

5. Ecran de serre selon la revendication 3, caractérisé en ce que le revêtement hautement réfléchissant sur le matériau pelliculaire est limité à une face, tandis que l'autre face est une couche absorbante des radiations thermiques.